# EUROPÄISCHE PATENTSCHRIFT

(11) **EP 1 473 479 B1**
(45) Veröffentlichungstag und Bekanntmachung des Hinweises auf die Patenterteilung: **21.03.2007**
(21) Anmeldenummer: 04009366.8
(22) Anmeldetag: 21.04.2004
(51) Int. Cl.: F16D 33/12

(54) **Verfahren zur Beeinflussung des Ablaufes von Betriebsmittel aus dem Arbeitskreislauf einer hydrodynamischen Klupplung und eine hydronamische Kupplung**
Method of influencing the discharge of working fluid from the working circuit of a hydrodynamic coupling and a hydrodynamic coupling
Procédé d'influencer la décharge de fluide du circuit du travail d'un accouplement hydrodynamique et un accouplement hydrodynamique

(30) Priorität: 28.04.2003 DE 10319255
(43) Veröffentlichungstag der Anmeldung: 03.11.2004
(73) Patentinhaber: Voith Turbo GmbH & Co. KG, 89522 Heidenheim (DE)
(72) Erfinder: Adleff, Kurt, 74564 Crailsheim (DE)
(74) Vertreter: Koch-Huld, Annegret Christa

(56) Entgegenhaltungen:
- DE-A- 1 750 198
- DE-B- 1 172 085
- US-A- 2 873 831

## Beschreibung

Die Erfindung betrifft ein Verfahren zur Beeinflussung des Ablaufes von Betriebsmittel aus dem Arbeitskreislauf einer hydrodynamischen Kupplung, insbesondere im Leerlaufbetrieb, im einzelnen mit den Merkmalen aus dem Oberbegriff des Anspruchs 1; ferner eine hydrodynamische Kupplung, nach dem Oberbegriff des Anspruchs 3.

Hydrodynamische Kupplungen sind in einer Vielzahl von Ausführungen beispielsweise aus Voith: "Hydrodynamik in der Antriebstechnik", Krauskopf-Verlag 1987 bekannt. Diese weisen wenigstens ein Primärschaufelrad und ein Sekundärschaufelrad auf, welche miteinander einen torusförmigen Arbeitsraum bilden. Dabei ist das Primärschaufelrad in der Regel wenigstens mittelbar mit einer Antriebsmaschine koppelbar, während das Sekundärschaufelrad, auch als Turbinenschaufelrad bezeichnet, mit der Abtriebsseite und damit dem anzutreibenden Bauelement gekoppelt ist. Denkbar ist jedoch auch eine Vertauschung der Funktionen zwischen Primärschaufelrad und Sekundärschaufelrad. Mit dem Sekundärschaufelrad ist beispielsweise ein im wesentlichen zylinderförmig gestaltetes Bauelement, welches sich über wenigstens einen Teil der axialen Erstreckung des Primärschaufelrades erstreckt, unter Bildung wenigstens eines radialen Zwischenraumes verbunden. Das zylinderförmige Bauelement, welches auch als Gehäuseteil bezeichnet wird, bildet eine sogenannte Kupplungsschale zur Aufnahme von aus dem Arbeitsraum austretenden Betriebsmittel. Dieses kann beispielsweise in einem Kreislauf aus dem Arbeitsraum heraus, über eine außerhalb der Kupplung befindliche Kühleinrichtung dem Arbeitsraum der hydrodynamischen Kupplung wieder zugeführt werden. Insbesondere im Leerlaufbetrieb, bei Antrieb des Primärschaufelrades und stillstehendem Sekundärschaufelrad und damit stillstehender Kupplungsschale, besteht das Problem im wesentlichen darin, daß es nur sehr schwer möglich ist, das Betriebsmittel aus dem Zwischenraum zwischen Primärschaufelrad und Innenwandung der Kupplungsschale abzuführen.

Zur Realisierung dieser Funktion sind eine Vielzahl von Möglichkeiten bekannt. Dabei wären zu nennen:
1. Verwendung einer Schöpfdüse
2. Verwendung einer kombinierten Ventil-Schöpfdüseneinrichtung
3. Verwendung eines Kugelventils
4. Verwendung eines Schnellentleerventils mit und ohne Düse

Im erstgenannten Fall ist die Schöpfdüse im Außenteil, d.h. in der stillstehenden Kupplungsschale integriert. Der Schöpfrohrmund erstreckt sich in radialer Richtung bis in den Bereich des Außenumfanges des Primärschaufelrades, wobei die Öffnung entgegengesetzt zur Drehrichtung des Innenlaufrades ausgebildet ist. Das Betriebsmittel wird somit direkt aus dem Zwischenraum über die Schöpfdüse abgegriffen und aus der Kupplungsschale hinausgefördert. Diese Ausführung weist jedoch den Nachteil auf, dass eine Einstellung der abgeführten Betriebsmittelmenge bzw. eine zeitliche Steuerung während des Füllvorganges nicht möglich ist.

Beim Einsatz eines Kugelventils in der Kupplungsschale ist das Ventil im Stillstand beider Schaufelräder geöffnet, so dass eine ungehinderte Verbindung zwischen dem Zwischenraum und der Ablaufleitung erzeugt wird. Bei Verringerung der Relativgeschwindigkeit zwischen Primärschaufelrad und Sekundärschaufelrad, d.h. bei Mitnahme des Sekundärschaufelrades schließt die Ventileinrichtung aufgrund der Fliehkraftwirkung. Auch hier besteht keine Möglichkeit einer feinfühligen Einstellbarkeit. Beim Einsatz eines Schnellventils, welches beispielsweise einen Ventilkörper in Form einer Membrane aufweist, erfolgt das Schließen des Ventils durch die Wirkung des Rotationsdruckes gegen den Ventilsitz. Zum Öffnen wird Öl aus dem Kupplungskreislauf in eine Kammer gedrückt, welche es ermöglicht, eine entgegengesetzte Kraft auf die Membrane auszuüben. Zur Realisierung der einzelnen Betriebsweisen ist eine entsprechende Ansteuerung der einzelnen Kammern zur Beaufschlagung der Membrane erforderlich. Der steuerungstechnische Aufwand ist relativ hoch.

Im allgemeinen gilt für alle beschriebenen Ausführungen bei Anwendungsfällen mit Innenradantrieb, d.h. Antrieb des Primärschaufelrades, dass beim Füllvorgang über einen längeren Zeitraum Betriebsmittel aus dem Kreislauf herausgefördert wird aufgrund der Ventilstellung und folglich dieses Betriebsmittel nicht zur Füllungserhöhung zur Verfügung stehen kann, was sich negativ auf einen Anfahrvorgang bei Verwendung in einem Antriebssystem auswirkt. Die gleiche Problematik aufgrund der Ausbildung der Ventileinrichtungen als Kugelventile ergibt sich bei einer Ausführung einer hydrodynamischen Kupplung mit mehreren parallel geschalteten hydraulischen Teilen gemäß DE 11 72 085. Auch hier sind in der Primärradschale entsprechende Kugelventileinrichtungen vorgesehen.

Eine Ausführung mit federbelasteten selbstregelnden Ventilen ist aus DE 17 50 198 vorbekannt, während US 2 873 831 eine Ausführung einer hydrodynamischen Kupplung mit federbelasteten Kugelventilen gemäß der vorbeschriebenen Ausführungen wiedergibt. Für alle Systeme gelten dabei die bereits genannten Nachteile.

Der Erfindung liegt daher die Aufgabe zugrunde, ein Verfahren zur Beeinflussung des Ablaufes von Betriebsmittel aus dem Arbeitskreislauf einer hydrodynamischen Kupplung sowie eine hydrodynamische Kupplung derart weiterzuentwickeln, dass die genannten Nachteile vermieden werden. Im einzelnen ist insbesondere im Leerlaufbetrieb der hydrodynamischen Kupplung auf eine sichere Abfuhr einer definierten kleineren Betriebsmittelmenge, z. B. zum Kühlen oder zum Schmieren, und zum anderen eine hohe Effizienz beim Füllen des Kreislaufes abzustellen.

Die erfindungsgemäße Lösung ist durch die Merkmale der Ansprüche 1 und 3 charakterisiert. Vorteilhafte Ausgestaltungen sind in den Unteransprüchen beschrieben.

Erfindungsgemäß erfolgt die Beeinflussung der Ablaufmenge aus dem Arbeitskreislauf einer hydrodynamischen Kupplung, unter welchem die sich zwischen dem Primär- und dem Sekundärschaufelrad einer hydrodynamischen Kupplung einstellende Strömung verstanden wird, in Abhängigkeit der sich durch den sich in Abhängigkeit des Füllungsgrades und der vorhandenen Relativgeschwindigkeit zwischen dem Primär- und dem Sekundärschaufelrad einstellenden Druckverhältnisse des Betriebsmittels, insbesondere der Betriebsmittelströmung in einer Kupplungsschale, welche drehfest mit einem der beiden Schaufelräder gekoppelt ist und das andere Schaufelrad in axialer Richtung unter Bildung eines radialen Zwischenraumes im Bereich der Trennebene zwischen beiden Schaufelrädern wenigstens teilweise umschließt. Als die die Druckverhältnisse charakterisierende Größe wird dabei der dynamische Druck der Betriebsmittelströmung im Zwischenraum zwischen Primärschaufelrad und Sekundärschaufelrad bzw. Primärschaufelrad und Kupplungsschale betrachtet, welcher auch durch den Staudruck bei Auftreffen der Betriebsmittel auf ein Hindernis beschreibbar ist. Mit zunehmender Verringerung der Relativgeschwindigkeit zwischen Primärschaufelrad und Sekundärschaufelrad, d.h. Annäherung von deren Drehzahlen, verringert sich dabei der Einfluss des Staudruckes auf den einzustellen Querschnitt in der Ablaufleitung bzw. einer Verbindungsleitung zur Ablaufleitung. Der den dynamischen Druck im Betriebsmittelstrom im Zwischenraum charakterisierende Staudruck wird als Steuerdruck für wenigstens eine Ventileinrichtung genutzt, mittels welcher der Querschnitt der Ablaufleitung beeinflussbar ist.

Die Kupplungsschale ist vorzugsweise derart ausgeführt, dass der radiale Zwischenraum im Bereich der Trennebene zwischen beiden Schaufelrädern sich in axialer Richtung von der Trennebene zum von der drehfesten Verbindung der Kupplungsschale freien Schaufelrad erstreckt. Die Funktionszuordnung Primär- und Sekundärschaufelrad zu den einzelnen Schaufelrädern bezüglich der Kopplung mit der An- und/oder Abtriebsseite ist dabei unerheblich. Des weiteren kann die Kupplungsschale drehfest mit dem Primärschaufelrad oder aber dem Sekundärschaufelrad verbunden sein. Eine bevorzugte Anwendung der erfindungsgemäßen Lösung ist eine hydrodynamische Kupplung mit einem Sekundärschaufelrad, welches mit der Kupplungsschale drehfest gekoppelt ist und welches mit der Abtriebsseite koppelbar ist. Das Sekundärschaufelrad, welches innerhalb der Kupplungsschale umläuft, ist dann wenigstens mittelbar mit einer Antriebsmaschine gekoppelt.

Im einzelnen werden wenigstens zwei Grundprinzipien bei Ableitung des Steuerdruckes aus dem hydrodynamischen Druck des im Zwischenraum strömenden Betriebsmediums unterschieden:
a) Erfassung eines dynamischen Druckwertes eines Betriebsmittelvolumenstromes und Beaufschlagung einer Ventileinrichtung;
b) Erfassung wenigstens zweier dynamischer Druckwerte zweier unterschiedlicher Betriebsmittelvolumenströme als Steuerdrücke, welche durch unterschiedliche Stromdicken charakterisierbar sind.

Im erstgenannten Fall wird lediglich ein dynamischer Druckwert im Betriebsmittelstrom im Zwischenraum erfasst und zur Beaufschlagung eines Ventilkörpers verwendet. Im zweiten Fall besteht die Möglichkeit durch entsprechende Auswahl der einzelnen Flächenverhältnisse der dem Steuerdruck bzw. Steuerdrücken ausgesetzten Flächen zueinander, eine feinfühligere Einstellung des Querschnittes der Ablaufleitung in Abhängigkeit von der Änderung der Relativgeschwindigkeit zwischen beiden Schaufelrädern zu erzielen und ein Schließen der Ventileinrichtung automatisch bei einer bestimmten Relativgeschwindigkeit zwischen Primär- und Sekundärschaufelrad ohne separate Erzeugung eines dafür erforderlichen Steuerdruckes zu realisieren.

Die Erfassung der dynamischen Druckwerte erfolgt dabei jeweils über eine gewisse Zeitdauer. Der Unterschied zwischen dem ersten und dem zweiten Fall besteht dabei lediglich darin, dass die Erfassung und Abnahme der dynamischen Druckwerte im ersten Fall an einer bestimmten Stelle im Zwischenraum erfolgt, während im zweiten Fall an zwei unterschiedlichen Orten, welche in radialer Richtung betrachtet auf uriterschiedlichen Durchmessern angeordnet sind, eine Erfassung mit entsprechenden Einrichtungen erfolgt.

Im zweiten Fall, bei Verwendung der dynamischen Druckwerte wenigstens zweier verschiedener Betriebsmittelströmungen, umfasst die Vorrichtung zur Beeinflussung des Ablaufes wenigstens eine Schöpfventileinrichtung und eine Schöpfeinrichtung, welche hydraulisch miteinander koppelbar sind. Beide - Schöpfventileinrichtung und Schöpfeinrichtung - umfassen Schöpfmittel in Form eines sich im wesentlichen von der Innenseite der Wandung der Kupplungsschale in den Zwischenraum in radialer Richtung erstreckenden Schöpfrohres, dessen Öffnung wenigstens hinsichtlich einer Komponente beschrieben werden kann, die in Umfangsrichtung und entgegen der Rotationsrichtung eines Schaufelrades, vorzugsweise des Primärschaufelrades ausgerichtet ist. Die Öffnungen der beiden Schöpfmittel sind jedoch auf unterschiedlichen Durchmessern, in radialer Richtung - bezogen auf die Rotationsachse der Kupplung - betrachtet, angeordnet. Die über die beiden Schöpfmittel erfassbaren dynamischen Drücke werden über Verbindungsleitungen am Ventilkörper der Schöpfventileinrichtung wenigstens mittelbar wirksam. Die Auslegung von Schöpfventileinrichtung und Schöpfeinrichtung sowie die Zuordnung der Schöpföffnungen der beiden Vorrichtungen auf unterschiedlichen Durchmessern bestimmen die Wirkung der durch die mittels der Schöpfmittel erfassten dynamischen Drücke auf den Ventilkörper.

Beispielsweise besteht die Möglichkeit, die Schöpföffnung des Schöpfmittels der Schöpfventileinrichtung auf einem geringeren Durchmesser als die Schöpföffnung der Schöpfeinrichtung anzuordnen. In diesem Fall wird über die Schöpfeinrichtung bei Stillstand der Kupplungsschale und sich einstellenden Betriebsmittelstrom im Zwischenraum zuerst der Ventilkörper in eine Position verbracht, in welcher dieser die Verbindung zwischen Zwischenraum, Schöpfeinrichtung und Ablaufleitung freigibt. Mit zunehmender Verringerung der Relativgeschwindigkeit zwischen Primärschaufelrad und Sekundärschaufelrad und damit zunehmender Dicke des sich einstellenden Betriebsmittelstromes im Zwischenraum oder sich sprunghaft ansteigenden Betriebsmittelzufluss, der ebenfalls die Dicke vergrößert, wobei die Schale nicht rotieren muss, wird über das Schöpfmittel der Schöpfventileinrichtung ein weiterer zweiter Steuerdruck aus dem dynamischen Druck im Betriebsmittelstrom abgeleitet, welcher dem Druck auf den Ventilkörper, welcher durch die Schöpfeinrichtung erzeugt wird, entgegengerichtet ist. Dabei wird der Ventilkörper in Richtung des Verschließens der Ablaufleitung verstellt. Das Verschließen kann vollständig oder aber nur teilweise erfolgen, so dass ständig Betriebsmittel aus der Kupplungsschale in den Behälter gelangt, und von dort aus wieder zurück zum Arbeitsraum. Der besondere Vorteil dieser Ausführung besteht darin, dass neben einer automatisierten feinfühligen Einstellung der Verhältnisse in der Ablaufleitung während bzw. im Standby-Betrieb ein definierter Kühlmittel- bzw. Schmiermittelstrom aufrechterhalten wird.

Schöpfventileinrichtung und Schöpfeinrichtung sind vorzugsweise zu einer Baueinheit zusammengefasst. Es besteht jedoch auch die Möglichkeit, bei Anordnung dieser Einrichtungen in bestimmten Abständen, über den Umfang der Kupplungsschalenwandung verteilt, beispielsweise eine Schöpfventileinrichtung mehreren Schöpfeinrichtungen zuzuordnen oder umgekehrt. In diesem Fall sind beide Grundeinheiten, Schöpfventileinrichtung und Schöpfeinrichtung, als separate Bauteile ausgeführt, die über ein Leitungssystem in der Wandung der Kupplungsschale miteinander verbunden sind. Im anderen Fall, d.h. der eindeutigen Zuordnung einer Schöpfventileinrichtung zu einer Schöpfeinrichtung, besteht diese Möglichkeit ebenfalls. Des weiteren ist es jedoch möglich, beide in einer Gesamtbaueinheit zusammenzufassen, welche in dieser Form vollständig in die Kupplungswandung integriert bzw. montiert werden kann.

Die Ausgestaltung der Schöpfventileinrichtung kann vielgestaltig erfolgen. Die zum Einsatz gelangenden Ventilkörper können unterschiedlich ausgeführt sein, denkbar sind kugelförmige Elemente, elastische Membranen oder flächenförmige Elemente. Entsprechend ist dann die Ausführung der entsprechenden Ventilsitze auszuwählen.

Die erfindungsgemäße Lösung ist in Kupplungstypen unterschiedlicher Ausführung einsetzbar. Die Kupplungen können als einfache Kupplungen, d.h. mit lediglich einem torusförmigen Arbeitsraum oder als Doppelkupplungen mit wenigstens zwei torusförmigen Arbeitsräumen ausgeführt werden.

Die Anzahl der Mittel zur Beeinflussung des Ablaufes von Betriebsmittel aus dem Arbeitskreislauf und deren Ausgestaltung ist von den konkreten Erfordernissen des Einzelfalles abhängig. Die entsprechende Auslegung liegt dann bei Kenntnis des Grundgedankens im Ermessen des Fachmannes.

Die erfindungsgemäße Lösung wird nachfolgend anhand von Figuren erläutert. Darin ist im einzelnen folgendes dargestellt:
- Fig. 1: verdeutlicht eine Ausführung einer erfindungsgemäß gestalteten hydrodynamischen Kupplung;
- Fig. 2a, 2b: verdeutlichen eine Einzelheit entsprechend Figur 1;
- Fig. 3: verdeutlicht anhand eines Beispiels das Grundprinzip eines erfindungsgemäß gestalteten Kugelventils;
- Fig. 4: verdeutlicht anhand einer beispielhaften Ausführung das Grundprinzip einer kombinierten Staudruckdüse entsprechend Figur 1;
- Fig. 5: verdeutlicht anhand einer vereinfachten Darstellung die Anwendung einer erfindungsgemäß gestalteten hydrodynamischen Kupplung in einem Antriebssystem.

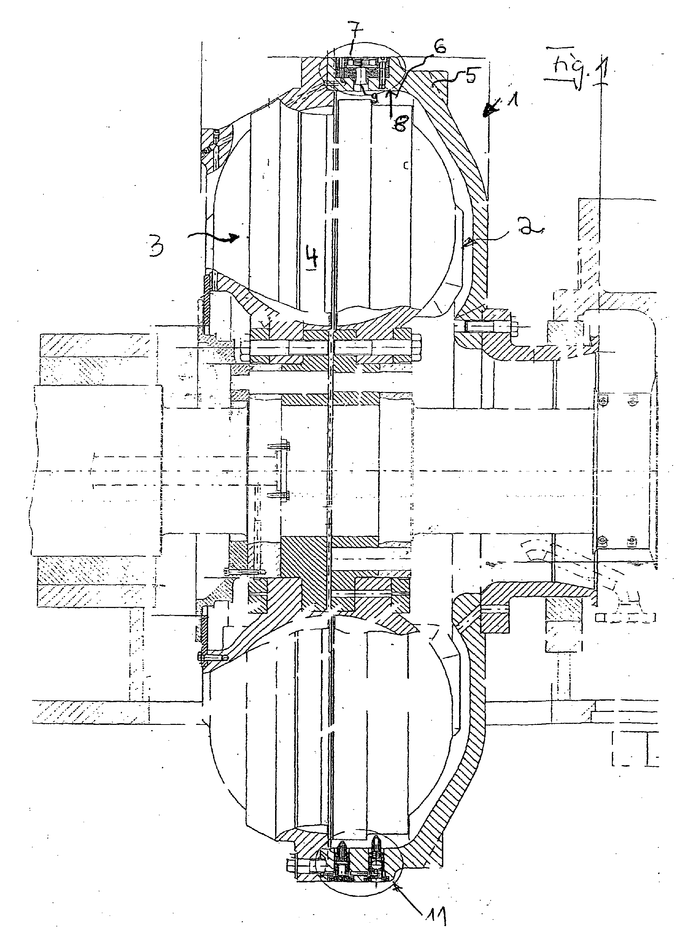

Die Figur 1 verdeutlicht beispielhaft eine Ausführung einer erfindungsgemäß gestalteten hydrodynamischen Kupplung 1, umfassend zwei Schaufelräder - ein Primärschaufelrad 2 und ein Sekundärschaufelrad 3 -, welche miteinander einen torusförmigen Arbeitsraum 4 zur Umwälzung von Betriebsmittel bilden für den bevorzugten Anwendungsfall des Antriebes über das innerhalb einer Kupplungsschale angeordnete Sekundärschaufelrad. Das Primärschaufelrad 2 fungiert im dargestellten Fall als Pumpenschaufelrad und ist wenigstens mittelbar mit einer hier im einzelnen nicht dargestellten Antriebsmaschine koppelbar. Das Sekundärschaufelrad 3 fungiert als Turbinenschaufelrad und ist wenigstens mittelbar mit einem hier im einzelnen nicht dargestellten Abtrieb koppelbar. Das Sekundärschaufelrad 3 ist drehfest mit einem im wesentlichen zylindrisch gestalteten Gehäuseteil 5 unter Bildung eines radialen Zwischenraumes 6 zwischen dem Primärschaufelrad 2 und dem Gehäuseteil 5 verbunden, welcher das Primärschaufelrad 2 in axialer Richtung wenigstens teilweise umschließt. Das im wesentlichen zylindrisch ausgeführte Gehäuseteil 5 bildet somit eine Schale für aus dem Arbeitsraum 4 austretendes Betriebsmittel, welche mit dem Gehäuse oder bzw. mittelbar einer Speichereinrichtung für Betriebsmittel über einen Ablauf in Verbindung steht. Bezüglich der Befüllung und der Entleerung des torusförmigen Arbeitsraumes 4 mit Betriebsmittel können die folgenden Betriebszustände der hydrodynamischen Kupplung 1 unterschieden werden:
1. Stillstandsentleerung
2. Standby-Kühlvorgang
3. Drehmomentenübertragung

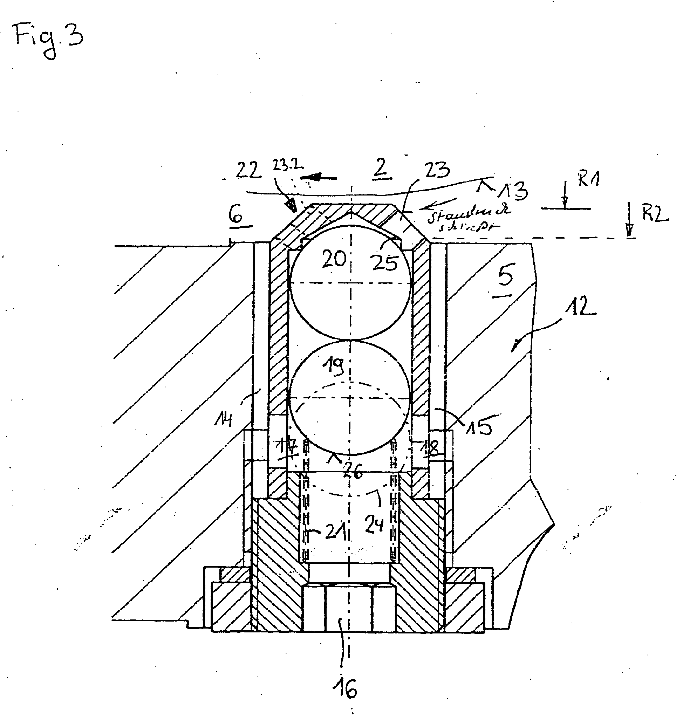

Im ersten Betriebszustand stehen sowohl das Primärschaufelrad 2 als auch das Sekundärschaufelrad 3 still. Das Betriebsmittel gelangt aus dem torusförmigen Arbeitsraum 4 über den radialen Zwischenraum 6 und beispielsweise entsprechende Einrichtungen 11 aus dem Arbeitskreislauf. Im Falle der Stillstandsentleerung ist die Einrichtung 11 als staudruckbetätigte Ventileinrichtung ausgeführt. Die Betriebsweise und Ausführung wird ausführlich in Figur 3 beschrieben.

In der zweiten Betriebsphase, dem sogenannten Standby-Betrieb, steht das abtriebseitige Schaufelrad, das Sekundärschaufelrad 3, still, während das antriebseitige Schaufelrad, hier das Primärschaufelrad 2, angetrieben wird und rotiert. Um übermäßige Belastungen der hydrodynamischen Baueinheit sowie des gesamten Systems zu vermeiden, wird in dieser Betriebsweise, d.h. dem Leerlauf, Betriebsmittel in einem dem eigentlichen Arbeitskreislauf, welcher durch die Strömungsverhältnisse zwischen dem Primär- und dem Sekundärschaufelrad im torusförmigen Arbeitsraum gekennzeichnet ist, zugeordneten Kühlmittelkreislauf geführt. Aus dem Arbeitsraum 4 gelangt dann Betriebsmittel in den wenigstens teilweise zylinderförmig gestalteten Gehäuseteil 5, d.h. die Schale, welche stillsteht. Dabei wird das in der Schale 5 befindliche Betriebsmittel durch die Rotation des Primärschaufelrades 2 in Umfangsrichtung mitgerissen. Zur Beeinflussung des Ablaufes aus dem stehenden zylinderförmigen Gehäuseteil 5, d.h. der Schale, ist erfindungsgemäß eine entsprechende Einrichtung zur Beeinflussung des Ablaufes von Betriebsmittel aus der Schale 5 vorgesehen, welche hier mit 11 bezeichnet ist und auch als Staudruckdüse bezeichnet wird. Die detaillierte Beschreibung der konkreten Ausführung erfolgt in den nachfolgenden Figuren.

Die Einrichtung zur Beeinflussung des Ablaufes von Betriebsmittel aus der Schale 5 ist ebenfalls im Bereich der Trennebene E in axialer Richtung, in Einbaulage der hydrodynamischen Kupplung 1 betrachtet, angeordnet, wobei jedoch eine Wirkverbindung zum Zwischenraum 6, welcher zwischen Primärschaufelrad 2 und Gehäuseteil 5 gebildet wird, besteht. Entsprechend der Kupplungsgröße ist wenigstens eine derartige Einrichtung zur Beeinflussung des Ablaufes von Betriebsmittel aus der Schale und damit dem Arbeitskreislauf vorgesehen. Vorzugsweise sind jedoch eine Vielzahl von Einrichtungen 11 mit konstantem Abstand oder unterschiedlichem Abstand über den Umfang 10 der Schale 5 verteilt in Umfangsrichtung angeordnet. Die konkrete Anzahl und die Auslegung erfolgt entsprechend den konkreten Einsatzerfordemissen. Die Einrichtung 11 umfasst wenigstens eine Ventileinrichtung, welche ein Öffnen und/oder Schließen wenigstens eines Verbindungskanales zwischen dem Innenumfang 8 der Schale 5 und dem Außenumfang 10 ermöglicht. Als Steuerdruck für die Ventileinrichtung fungiert dabei der den dynamischen Druck im Betriebsmittelstrom im Zwischenraum 6 auf einem bestimmten Durchmesser, bezogen auf die Kupplungssymmetrieachse A beschreibenden Staudruck. Dadurch wird erreicht, daß einerseits eine sichere Abfuhr einer definierten kleineren Ölmenge z.B. zum Kühlen im Leerlaufbetrieb möglich wird, während andererseits eine hohe Effizienz beim Füllen des Arbeitskreislaufes, d.h. des torusförmigen Arbeitsraumes 4 erzielt wird, da das Betriebsmittel nicht über einen längeren Zeitraum zum größten Teil aus dem Arbeitskreislauf herausgefördert und folglich zur Füllungserhöhung zur Verfügung steht. Durch die Abhängigkeit vom dynamischen Druck im Betriebsmittelstrom in der Kupplungsschale 5, welcher sich an einzelnen Strömungspunkten in radialer Richtung mit zunehmender Dicke des Betriebsmittelstromes bei Verringerung der Relativgeschwindigkeit zwischen dem Primärschaufelrad 2 und dem Sekundärschaufelrad 3 verändert, wird es möglich, unter Ausnutzung der die dynamischen Drücke beschreibenden Staudrücke eine Beeinflussbarkeit des Ablaufes aus der Kupplungsschale 5 in Abhängigkeit der Füllungsgraderhöhung und des sich einstellenden Schlupfes, d.h. der Relativgeschwindigkeit zwischen beiden Schaufelrädern, zu ermöglichen.

Im dritten Betriebszustand, der Übertragung von Drehmoment, ist die Relativgeschwindigkeit zwischen dem Primärschaufelrad 2 und dem Sekundärschaufelrad 3 lediglich durch ca. 3 bis 5 % Schlupf zwischen beiden Schaufelrädern gekennzeichnet. Zwischen beiden Schaufelrädern, dem Primärschaufelrad 2 und dem Sekundärschaufelrad 3, bildet sich im torusförmigen Arbeitsraum 4 ein Arbeitskreislauf aus, der dadurch gekennzeichnet ist, dass Drehmoment vom Primärschaufelrad 2 zum Sekundärschaufelrad 3 durch Strömungskräfte übertragen wird. Das Betriebsmittel wird zwischen dem Primärschaufelrad 2 und dem Sekundärschaufelrad 3 umgewälzt. In diesem Betriebszustand gelangt lediglich nur noch ein sehr geringer Teil von Betriebsmittel aus dem torusförmigen Arbeitsraum 4 in das Gehäuse über entsprechende Öffnungen in der Schale 5. Dieser geringe Teil wird vorzugsweise in einem geschlossenen Kühlmittelkreislauf dem Arbeitsraum 4 entzogen und nach Kühlung wieder zugeführt.

Des weiteren sind Einrichtungen 7 in Form von Schnellentleerventileinrichtungen vorgesehen, über welche im Überlastfall das Betriebsmittel aus der Kupplungsschale 5 beispielsweise in das Gehäuse oder andere in der hydrodynamischen Kupplung 1 vorgesehene Kammern gelangt, von welchen aus es beispielsweise einem Tank mittels entsprechender Einrichtung z.B. über ein Schöpfrohr oder über eine entsprechende Leitungsführung zugeführt werden kann. Der Tank kann dabei im Gehäuse integriert sein oder aber außerhalb des Gehäuses vorgesehen werden. Die Einrichtung 7 zur Stillstandsentleerung ist vorzugsweise als Schnellentleerventil ausgeführt, welche beim Stillstand beider Schaufelräder und damit bei Relativgeschwindigkeit Null entweder durch den Betriebsmitteldruck in der Schale 5 oder aber einen separat aufgebrachten Steuerdruck geöffnet ist. In den anderen Betriebszuständen ist für die dargestellte Zuordnung von Antrieb und Abtrieb zu den einzelnen Schaufelrädern das Schnellentleerventil geschlossen, entweder durch Federkraft oder durch den herrschenden Betriebsmitteldruck. Bei Vertauschen der Funktionen Antrieb und Abtrieb ist das Schnellentleerventil in der Betriebsweise Standby geöffnet. Dies wird dann aufgrund der bei Rotation des Sekundärschaufelrades 3 auftretenden Fliehkräfte bewirkt. Die Schnellentleerventileinrichtung 7 ist, in axialer Richtung betrachtet, bezogen auf die Einbaulage der hydrodynamischen Kupplung 1 im Bereich der Trennebene E zwischen den beiden Schaufelrädern 2 und 3 angeordnet. Vorzugsweise sind in Umfangsrichtung der hydrodynamischen Kupplung 1 eine Mehrzahl von derartigen Ventileinrichtungen über den Umfang verteilt vorzugsweise in gleichbleibenden Abständen angeordnet. Die Ventileinrichtung gibt dabei jeweils einen Ablaufkanal 9 frei, welcher sich vom Innenumfang der Schale 5 zum Außenumfang der Schale 5 erstreckt und somit den Zwischenraum 6 mit dem hier im einzelnen nicht dargestellten Gehäuse oder einer durch das Gehäuse gebildeten Schale verbindet.

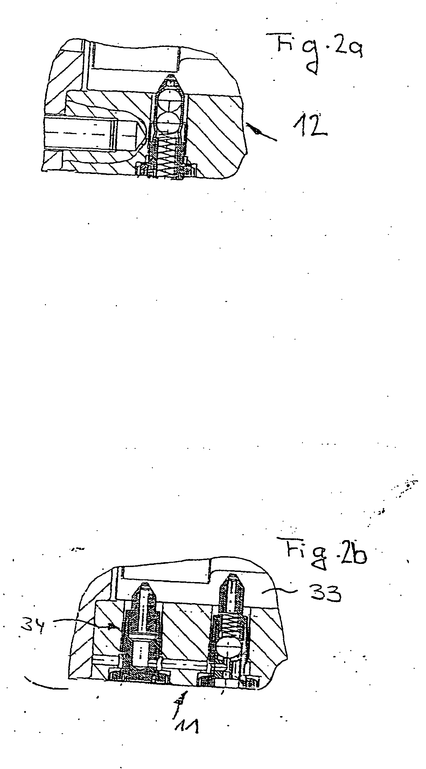

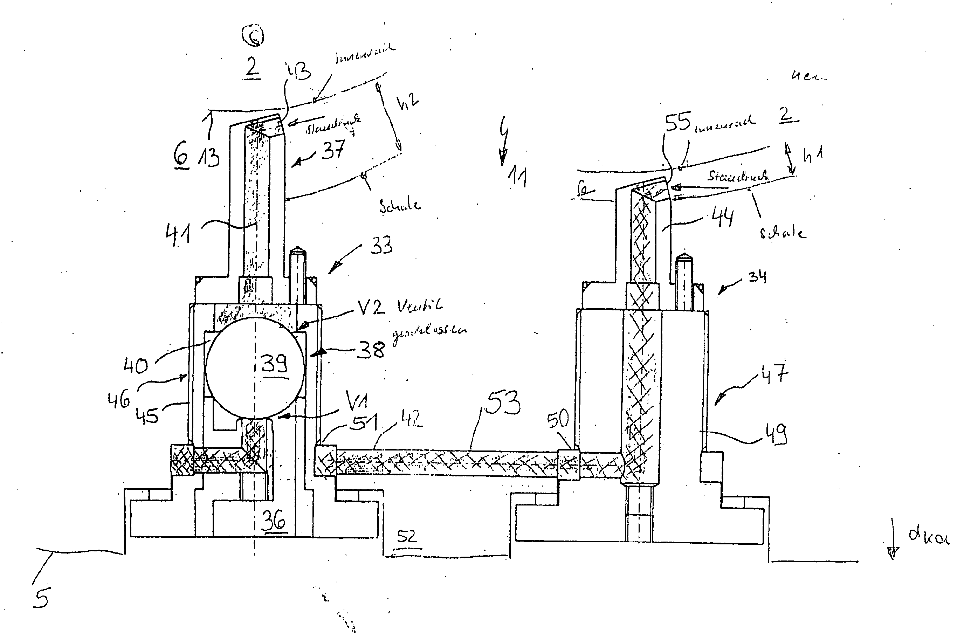

Die Figuren 2a und 2b verdeutlichen in vergrößerter Darstellung eine Ausführung für die in der Figur 1 dargestellte Einrichtung zur Beeinflussung des Ablaufes aus der Kupplungsschale 5. In der Figur 2a ist dabei ein Kugelventil 12 dargestellt, während die Figur 2b eine Ausführung für eine Staudruckdüse, umfassend ein Schöpfventil 13 und eine Schöpfschraube 14, wiedergibt. Die Grundprinzipien beider Ausführungen werden anhand der Figuren 3 und 4 erläutert.

Die Figur 3 verdeutlicht das Grundprinzip einer staudruckbetätigten Ventileinrichtung am Beispiel eines Kugelventils 12. Dieses ist im zylinderförmigen Gehäuseteil 5, d.h. dem die Schale bildenden Gehäuseteil, integriert. Das Ventil dient der Steuerung bzw. Beeinflussung des Ablaufes aus dem Zwischenraum 6 der Kupplungsschale 5 aus dieser heraus, insbesondere bei Stillstandsentleerung. Der Außenumfang 13 des Primärrades 2 ist hier lediglich angedeutet. Der Zwischenraum 6 ist über Verbindungsleitungen 14 bzw. 15 entsprechend der Stellung der Ventileinrichtung 12 mit der Ablaufleitung 16 verbindbar. Die Ventileinrichtung 12 umfasst zu diesem Zweck jeweils einen Verbindungskanal 17 bzw. 18, welcher die Verbindungskanäle 14 bzw. 15 mit dem Ablaufkanal 16 verbinden kann. Die Ventileinrichtung weist des weiteren wenigstens einen Ventilkörper, hier zwei Ventilkörper in Form von kugelförmigen Elementen 19 bzw. 20, auf. Die kugelförmigen Elemente werden unter Beaufschlagung mit einem Steuerdruck von einer Energiespeichereinrichtung, vorzugsweise in Form einer Federeinrichtung 21, in einer Position gehalten, welche die Verbindungsleitungen 17 bzw. 18 zwischen den Verbindungsleitungen 14 bzw. 15 und der Ablaufleitung 16 freigeben. Diese Stellung wird von der Ventileinrichtung 12 bei stehendem Primärschaufelrad 2 und stehendem Sekundärschaufelrad 3 eingenommen. Wird der torusförmige Arbeitsraum 4 mit Betriebsmittel befüllt, tritt Betriebsmittel aus diesem in die Kupplungsschale 5 und damit den Zwischenraum 6 und wird durch die Rotation des Primärschaufelrades 2 mitgerissen. Zur Beeinflussung des Austrittes von Betriebsmittel aus dem Zwischenraum 6 in die Ablaufleitung 16, in Abhängigkeit der Füllung der hydrodynamischen Kupplung und damit auch der Verringerung der Relativgeschwindigkeit zwischen dem Primärschaufelrad 2 und dem Sekundärschaufelrad 3 wird der sich im Betriebsmittelstrom im Zwischenraum 6 bei Rotation des Primärschaufelrades 2 einstellende dynamische Druck in Form eines Staudruckes als Steuerdruck für die Ventileinrichtung verwendet. Die Ventileinrichtung ist zu diesem Zweck derart ausgebildet, dass diese ein kopfseitiges Ende 22 aufweist, welches in den Zwischenraum hineinragt und eine Öffnung 23 aufweist, deren Lage sich wenigstens mittels einer Komponente beschreiben lässt, die in Umfangsrichtung der hydrodynamischen Kupplung 1 und entgegen der Rotationsrichtung des Primärschaufelrades 2 ausgebildet ist. Diese Öffnung 23, welche auch als Schöpfmund bezeichnet wird, ist des weiteren in der Nähe der Außenkontur 13 des Primärschaufelrades 2 vorgesehen. Die Ausrichtung der Schöpföffnung ist der Drehrichtung des Primärschaufelrades 2 entgegengesetzt. Über den Schöpfmund 23 wird Betriebsmittel abgegriffen, welches auf die Ventilkörper, im einzelnen auf die kugelförmigen Elemente 20 bzw. 19 wirkt. Das durch den Schöpfmund 23 eintretende Betriebsmittel erzeugt dabei den Steuerdruck für die Betätigung der Ventileinrichtung 12. Die Größe dieses Steuerdruckes ist dabei vom dynamischen Druck in radialer Richtung der hydrodynamischen Kupplung 1, in Einbaulage betrachtet, im Zwischenraum in einem Bereich betrachtet, welcher sich durch die Lage der Schöpföffnung 23 beschreiben lässt, sowie der Betriebsmittelführung in der Schöpföffnung abhängig. Die Lage der Schöpföffnung 23 ist dabei in radialer Richtung über die beiden Radien R1 und R2 beschreibbar. Entsprechend der Größe des in der Schöpföffnung 23 anliegenden Steuerdruckes, welcher auf die Oberfläche der kugelförmigen Elemente 20 unmittelbar und 19 mittelbar wirkt, werden die beiden Ventilkörper in Form von kugelförmigen Elementen 19 bzw. 20 in radialer Richtung, bezogen auf die Einbaulage der hydrodynamischen Kupplung betrachtet nach außen entgegen der durch die Energiespeichereinrichtung 21 aufgebrachten Kraft gedrückt, wobei dieser Vorgang stufenlos erfolgt und im Endzustand, welcher lediglich strichpunktiert angedeutet ist, die Verbindungsleitungen vom Zwischenraum 6, 14 bzw. 15 von der Ablaufleitung 16 entkoppelt. Das Ventil ist dann geschlossen. Im Übergangsbereich zwischen den beiden Grundzuständen - Ventileinrichtung 12 geöffnet und Ventileinrichtung 12 geschlossen - wird eine gedrosselte Verbindung zwischen der Verbindungsleitung 14 bzw. 15 und der Ablaufleitung 16 freigegeben.

Mit zunehmender Beschleunigung des Sekundärschaufelrades 3 und damit auch der Kupplungsschale 5, welche eine Verringerung der Relativgeschwindigkeit zwischen dem Primärschaufelrad 2 und dem Sekundärschaufelrad 3 zur Folge hat, verringert sich die Wirkung des Staudruckes auf die Ventileinrichtung 12. In diesem Fall werden dann die Ventilkörper, hier in Form der kugelförmigen Elemente 19 bzw. 20, aufgrund der wirkenden Fliehkräfte in die strichpunktierte Position verbracht, in welcher der Zwischenraum 6 von der Ablaufleitung 16 gänzlich entkoppelt ist.

Beide Grenzpositionen der Ventileinrichtung 12, Ventil offen und Ventil geschlossen, werden durch die Stellung der Ventilkörper 19 bzw. 20 in den Ventilsitzen 24 bzw. 25 beschrieben. Im Ventilsitz 24 deckt der Ventilkörper 19 in Form des kugelförmigen Elementes mit seiner Oberfläche 26 vollständig ab, so daß keine Verbindung zwischen den Verbindungsleitungen 17 bzw. 18 mit der Ablaufleitung 16 ermöglicht wird.

Die in der Figur 3 dargestellte Ausführung einer staudruckbetätigten Ventileinrichtung 12 stellt lediglich eine Ausführung dar. Bezüglich der konkreten konstruktiven Ausgestaltung sowie der Verwendung entsprechender Ventilkörper sind Abwandlungen möglich. Die dargestellte Ventileinrichtung 12 ist dabei lediglich für eine hydrodynamische Kupplung bestimmter Betriebsrichtung einsetzbar. Es besteht jedoch auch die hier im einzelnen nicht dargestellte Möglichkeit, die Ventileinrichtung 12 universell für jede x-beliebige Rotationsrichtung und damit Verwendung der hydrodynamischen Kupplung 1 einsetzbar zu gestalten, indem ein weiterer zweiter Schöpfmund 23.2 vorgesehen wird, welcher, bezogen auf die Darstellung in Figur 3, am kopfseitigen Ende 22 in Rotationsrichtung des Primärschaufelrades 2 ausgerichtet wäre und hier strickpunktiert angedeutet ist. Die Ventileinrichtung 12 wäre in diesem Fall vollständig symmetrisch ausgeführt.

Eine bevorzugte Anwendung dieser Ventileinrichtung 12 stellt die Phase der Stillstandsentleerung dar.

In der Figur 4 wird das Grundprinzip einer weiteren Anwendungsmöglichkeit der Nutzung des Staudruckes zur Betätigung einer Ventileinrichtung zur Beeinflussung des Ablaufes aus der Kupplungsschale dargestellt. Die Einrichtung 11 umfasst dazu eine Schöpfventileinrichtung 33 und eine Schöpfeinrichtung 34. Die Schöpfventileinrichtung 33 umfasst einen Schöpfteil 37, welcher in radialer Richtung in den Zwischenraum 6 hineinragt und sich vorzugsweise bis in den Bereich des Außenumfanges 13 des Innenrades, d.h. des Primärschaufelrades 2, erstreckt. In radialer Richtung schließt sich an den Schöpfteil 37 die Ventileinrichtung 38 an. Die Ventileinrichtung 38 umfasst einen Ventilkörper, im dargestellten Fall in Form eines kugelförmigen Elementes 39. Schöpfteil 37 und Ventileinrichtung 38 sind vorzugsweise zu einer Baueinheit zusammengefasst. In diesem Fall sind in der Ventileinrichtung sowie dem Schöpfteil auch die Verbindungsleitungen integriert. Der Ventilkörper 39 ist im Ventilinnenraum 40 angeordnet, welcher derart ausgestaltet ist, dass wenigstens zwei Ventilsitze V1 und V2 realisierbar sind. Der Ventilinnenraum 40 ist mit zwei Steuerdruckleitungen 41 und 42 verbunden. Die erste Steuerdruckleitung 41 ist dabei im Schöpfteil 37 angeordnet und erstreckt sich von der Schöpföffnung 43 bis zum Innenraum 40 und ist am Ventilsitz V2 mit diesem verbunden. Die zweite Steuerdruckleitung 42 koppelt den Zwischenraum 6 über die zweite Schöpfeinrichtung 34 mit dem Ventilinnenraum 40 der Ventileinrichtung 38. Die zweite Steuerdruckleitung 42 mündet dabei im Ventilsitz V1 in den Innenraum 40. Mit dem Innenraum 40 des weiteren gekoppelt ist eine Ablaufleitung 36, welche gleichzeitig als Ablaufleitung aus dem Zwischenraum 6 fungiert. Beide, Schöpfventileinrichtung 33 und Schöpfeinrichtung 34, weisen Schöpföffnungen auf, welche entgegen der Drehrichtung des Primärschaufelrades 2 ausgerichtet sind. Die Schöpföffnungen sind jedoch in radialer Richtung, in Einbaulage der hydrodynamischen Kupplung betrachtet, auf unterschiedlichen Durchmessern angeordnet, so dass entsprechend der Dicke des sich einstellenden Volumenstromes h1 oder h2 im Zwischenraum 6 ein Staudruck erfasst werden kann oder nicht und an Ventileinrichtung 38 wirksam wird oder nicht. Im dargestellten Fall wird somit der Gesamtsteuerdruck aus zwei Teilsteuerdrücken gebildet, weshalb automatisch eine wesentlich feinfühligere Einstellung des Querschnittes der Verbindung zwischen dem Zwischenraum 6 und der Ablaufleitung 36 möglich wird.

Beide - Schöpfventileinrichtung 33 und Schöpfeinrichtung 34 - sind vorzugsweise als Baueinheit ausgeführt. Beide umfassen jeweils ein Schöpfteil, die Schöpfventileinrichtung 33 das Schöpfteil 37 und die Schöpfeinrichtung 34 das Schöpfteil 44, welche mit einem Grundkörper zur Befestigung in der Kupplungsschale 5 verbunden sind, bzw. einstückig mit diesem ausgebildet sind. Der Grundkörper 46 wird bei der Schöpfventileinrichtung 33 vom Gehäuse 45 der Ventileinrichtung 38 gebildet, welches mit einem Außengewinde versehen sein kann, während der Grundkörper 47 bei der Schöpfeinrichtung 34 von einem mit einem Außengewinde versehenen rotationssymmetrischen Bauteil 49 gebildet wird. Die Ausgestaltung der Grundkörper 46 bzw. 47 mit Außengewinden zur Realisierung einer kraft- bzw. formschlüssigen Verbindung mit der Kupplungsschale 5 stellt eine bevorzugte Ausführung dar. Denkbar sind jedoch auch andere kraftschlüssige Verbindungen, beispielsweise Pressverbindungen.

Die Verbindungsleitungen zwischen den Schöpfrohröffnungen 43 bzw. 55 erstrecken sich vorzugsweise in Einbaulage der hydrodynamischen Kupplung 1 in radialer Richtung zum jeweiligen Grundkörper. Zur Kopplung zwischen der Schöpfventileinrichtung 33 und der Schöpfeinrichtung 34 sind an den jeweiligen Grundkörpern entsprechende Anschlüsse vorgesehen, am Grundkörper 47 der Anschluss 50 und am Grundkörper 46 der Anschluss 51. In Einbaulage der Schöpfventileinrichtung 33 und der Schöpfeinrichtung 34 sind die Anschlüsse 50 bzw. 51 über eine in der Wandung 52 der Kupplungsschale eingearbeitete Verbindungsleitung 53 miteinander gekoppelt. Die Ausführung der Verbindungsleitung 53 in der Wandung 52 der Kupplungsschale 5 stellt eine bevorzugte Ausführung dar. Denkbar sind des weiteren Ausführungen, bei welchen die Verbindungsleitung 53 als separates Leitungsstück auf einem Durchmesser außerhalb des Kupplungsschalen-Außendurchmessers d_{KA} verlaufen.

Die Anschlüsse 50 bzw. 51 bzw. die einzelnen Leitungen zueinander mit Richtungsänderung sind vorzugsweise jeweils senkrecht ausgeführt

Eine andere, hier nicht dargestellte, konstruktive Ausführungsmöglichkeit besteht darin, Schöpfventileinrichtung 33 und Schöpfeinrichtung 34 als vorgefertigte Baueinheit auszugestalten und in die Kupplungsschalenwandung 52 zu integrieren. Die Verbindungsleitung 53 ist dann Bestandteil der Gesamtbaueinheit 11.

In der in Figur 4 dargestellten Betriebsweise versperrt die Schöpfventileinrichtung 33 die Ablaufleitung 36. Dies bedeutet, dass kein Betriebsmittel vom Zwischenraum 6 in die Ablaufleitung 36 gelangt. Dies ist in der Regel dann der Fall, wenn ein Betriebszustand der hydrodynamischen Kupplung erreicht wird, welcher sich durch eine minimale Relativgeschwindigkeit zwischen Primär- und Sekundärschaufelrad auszeichnet. In diesem Fall befindet sich der Ventilkörper 39 im Ventilsitz V1.

Im anderen, hier nicht dargestellten, Funktionszustand, in welchem das Sekundärschaufelrad 3 und damit die Kupplungsschale 5 stillsteht, während das Primärschaufelrad 2 rotiert, gelangt während des Füllvorganges der hydrodynamischen Kupplung 1, insbesondere des Arbeitsraumes 4, Betriebsmittel aus diesem in den Zwischenraum 6 und wird aufgrund der durch die Rotation des Primärschaufelrades 2 auf das Betriebsmittel wirkenden Kräfte mitgerissen, weshalb sich in Rotationsrichtung des Primärschaufelrades 2 ein Betriebsmittelstrom im Zwischenraum 6 ausbildet. Da der Flüssigkeitsring bzw. Betriebsmittelring im Zwischenraum 6 sich mit zunehmender Verringerung der Relativgeschwindigkeit der beiden Schaufelräder zueinander vergrößert und somit im Bereich der größten Relativgeschwindigkeit der beiden Schaufelräder 2 und 3 zueinander seine geringste Dicke aufweist, stellen sich unterschiedliche Strömungsgeschwindigkeiten ein. Aufgrund der unterschiedlichen Anordnung der Schöpföffnungen 43 bzw. 55 auf unterschiedlichen Durchmessern, bezogen auf die Einbaulage der hydrodynamischen Kupplung 1, werden somit zu unterschiedlichen Zeitpunkten Staudrücke erfasst. In einem Betriebsbereich, welcher sich durch die Ausbildung eines rotierenden Strömungsringes im Zwischenraum 6 in Höhe von h1 auszeichnet, wird lediglich über die Schöpfeinrichtung 34 ein Steuerdruck, welcher proportional zum dynamischen Druck des im Zwischenraum 6 strömenden Betriebsmittels ist, erzeugt. Der über die Schöpfeinrichtung 37 der Schöpfventileinrichtung 33 in diesem Betriebszustand erfassbare Druck kann lediglich durch den Druck der im vom Betriebsmittel freien Bereich mitgeschleppten Luft beschrieben werden. Dieser Wert ist jedoch vernachlässigbar gering.

Der über die Schöpfeinrichtung erfasste Staudruck wird im Bereich des Ventilsitzes V1 der Ventileinrichtung 37 wirksam. Durch den Druckabfall, der durch die durchströmende Flüssigkeit im Zwischenraum 6, welche durch die Schöpfeinrichtung 37 abgeschält wird, an der in der Ventileinrichtung 38 vorgesehenen Drosselstelle, dem Ventilsitz V1, erzeugt wird, wird der Ventilkörper, hier die Kugel 39, in einer geöffneten Position gehalten. Nach dem Ventilsitz V1 erfolgt eine deutliche Querschnittserweiterung zur Ablaufleitung 36 hin, so dass die Flüssigkeit über die Verbindungsleitung über die Steuerdruckleitung 42 ohne Rückstau in der Ablaufleitung 36 abfließen kann. Durch den in der Steuerdruckleitung 42 anstehenden Druck wird der Ventilkörper, hier die Kugel 39, auf den zweiten Ventilsitz V2 gepresst, dessen wirksame Fläche größer ist als die wirksame Fläche an der Drosselstelle bzw. dem Ventilsitz V1. Der zweite Ventilsitz ist mit der Steuerdruckleitung 41 der Schöpfeinrichtung 37 verbunden, welche bespült wird, wenn der durch das Primärschaufelrad mitgenommene Betriebsmittelring in seiner Dicke plötzlich zunimmt, und zwar wenigstens auf eine Dicke h2. Dies wird in der Regel durch eine starke Erhöhung der zugeführten Betriebsmittelmenge zum Kupplungskreislauf während des Füllvorganges erzielt. Durch den über die Schöpfeinrichtung 37 abgegriffenen Staudruck, welcher durch den dynamischen Druck im Betriebsmittelstrom im Zwischenraum 6 bestimmt wird, und das gewählte Flächenverhältnis wird der Ventilkörper, hier die Kugel 39, auf den Ventilsitz V1 gepresst und gleichzeitig der Ablauf wieder verschlossen. Wenn das Sekundärschaufelrad 3 und damit die Kupplungsschale 5 losbricht, d.h. mitrotiert, und somit die Relativgeschwindigkeit zwischen Primärschaufelrad 2 und Sekundärschaufelrad 3 abnimmt, wird der Ventilkörper 39 durch Fliehkraft auf den Ventilsitz V1 gepresst und somit die Ablaufleitung 36 verschlossen. Entscheidend für die Funktionsweise ist somit neben der Anordnung der Schöpföffnung entgegen der Strömungsrichtung des Betriebsmittels im Zwischenraum 6 auch die entsprechende Auslegung der Flächenverhältnisse im Ventilkörper an den einzelnen Ventilsitzen.

Auch bei dieser kombinierten Schöpfventileinrichtung-Schöpfeinrichtungseinheit besteht die Möglichkeit, die einzelnen Schöpfeinrichtungen - Schöpfventileinrichtung oder Schöpfeinrichtung - ebenfalls symmetrisch auszugestalten und zusätzlich mit einer weiteren Schöpföffnung zu versehen, welche derart angeordnet ist, dass diese es erlaubt, auch bei Drehrichtungswechsel die Funktion zu erfüllen.

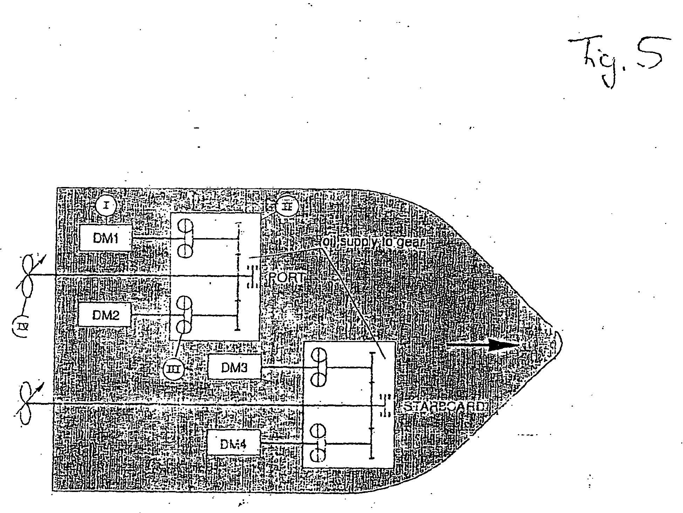

Die Figur 5 verdeutlicht in schematisch vereinfachter Darstellung einen Anwendungsfall der erfindungsgemäßen Ventilbetätigung durch eine den hydrodynamischen Druck im Betriebsmittelstrom im Zwischenraum 6 der hydrodynamischen Kupplung charakterisierende Größe in einem Antriebssystem 60 für Schiffe. Das Antriebssystem umfasst vier Antriebsmaschinen in Form von Verbrennungsmotoren DM1 bis DM4. Wenigstens jeweils zwei Verbrennungsmotoren DM1 und DM2 bzw. DM3 und DM4 dienen dem Antrieb einer Propellereinrichtung 61 bzw. 62. Die Drehmomentenübertragung von den einzelnen Verbrennungskraftmaschinen auf die mit den Propellern gekoppelten Abtriebswelle erfolgt über hydrodynamische Drehmomentenübertragungseinheiten, hier die Kupplungseinrichtungen K1 bis K4 auf ein entsprechendes Verteilergetriebe G1 bzw. G2, dessen Ausgang mit dem Propeller gekoppelt ist. Im sogenannten Leerlaufbetrieb wird das Primärschaufelrad P der hydrodynamischen Kupplung direkt angetrieben, und beim Einschalten der Kupplung wird dieser Betriebsmittel zugeführt. Vorzugsweise werden dazu die Zuleitungen der angetriebenen Primärschaufelräder der einzelnen Propellerantriebe miteinander verbunden. Über entsprechende Einrichtungen, beispielsweise Blenden können die erforderlichen Betriebsmittelströme eingestellt werden. Steht einer der Antriebsmotoren, wird die diesem zugeordnete hydrodynamische Kupplung mit Kühlöl/Schmieröl vom angetriebenen Antriebsstrang versorgt. Dieses fließt nach dem Durchgang durch die hydrodynamische Kupplung wieder dem Ölsumpf zu.

## Patentansprüche

1. Verfahren zur Beeinflussung des Ablaufes von Betriebsmittel aus dem Arbeitskreislauf einer hydrodynamischen Kupplung, umfassend zwei Schaufelräder - ein Primärschaufelrad und ein Sekundärschaufelrad - und eine drehfest mit einem Schaufelrad verbundene, das andere Schaufelrad in axialer Richtung wenigstens teilweise unter Bildung eines radialen Zwischenraumes umschließende Gehäusewandung in Form einer Kupplungsschale, welche wenigstens mit einem Ablauf koppelbar ist und wenigstens ein Mittel zur Beeinflussung des Ablaufes;
bei welchem das oder die Mittel zur Beeinflussung des Ablaufes in Abhängigkeit einer, die sich in Abhängigkeit des Füllungsgrades der hydrodynamischen Kupplung und der auftretenden Relativgeschwindigkeit zwischen dem Primär- und dem Sekundärschaufelrad einstellenden Druckverhältnisse wenigstens mittelbar beschreibendenden Größe, ansteuerbar sind;
bei welchem selbsttätig beim Erreichen einer bestimmten die Druckverhältnisse zwischen Primärschaufelrad und Sekundärschaufelrad charakterisierenden Größe der Ablauf aus dem Arbeitskreislauf bzw. aus der Kupplungsschale unterbrochen wird;
als Mittel zur Beeinflussung des Ablaufes wird wenigstens eine Ventileinrichtung verwendet, wobei der Steuerdruck zur wenigstens mittelbaren Beaufschlagung des Ventilsitzes in Abhängigkeit der die Druckverhältnisse zwischen Primärschaufelrad und Sekundärschaufelrad charakterisierenden Größe gebildet wird;
**gekennzeichnet durch** folgendes Merkmal:
der Steuerdruck zur Beaufschlagung des Ventilsitzes wird aus zwei Teilsteuerdrücken gebildet, welche von den dynamischen Drücken zweier sich zeitlich versetzt zueinander in der Kupplungsschale einstellenden Strömungen unterschiedlicher Strömungsdicke gebildet werden.

2. Verfahren nach Anspruch 1, **dadurch gekennzeichnet, dass** die die Druckverhältnisse zwischen Primärschaufelrad und Sekundärschaufelrad charakterisierende Größe vom dynamischen Druck der sich in der Kupplungsschale einstellenden Strömung gebildet wird.

3. Hydrodynamische Kupplung
mit zwei Schaufelrädern - einem, mit einem Antrieb wenigstens mittelbar koppelbaren Primärschaufelrad und einem, mit einem Abtrieb wenigstens mittelbar koppelbaren Sekundärschaufelrad -, welche miteinander wenigstens einen torusförmigen Arbeitsraum bilden;
mit einer drehfest mit einem Schaufelrad verbundenen, das andere Schaufelrad in axialer Richtung wenigstens teilweise unter Bildung eines radialen Zwischenraumes umschließende Gehäusewandung in Form einer Kupplungsschale;
der Kupplungsschale ist wenigstens ein Ablauf zugeordnet;
mit wenigstens einem Mittel zur Beeinflussung des Ablaufes;
jedes Mittel umfasst wenigstens eine Ventileinrichtung, welche zwischen Zwischenraum und Ablauf angeordnet ist;
die Ventileinrichtung umfasst wenigstens einen Ventilkörper und eine Steuerdruckleitung zur Beaufschlagung wenigstens eines Ventilkörpers;
der Ventileinrichtung ist wenigstens eine Staudruckerfassungs- bzw. Steuerdruckerzeugungseinrichtung zur Ermittlung des dynamischen Druckes des Betriebsmittelstromes im Zwischenraum und Ableitung des die Steuerdruckleitung beaufschlagenden Steuerdruckes zugeordnet;
die Ausgestaltung und Zuordnung von Staudruckerfassungsbeziehungsweise Steuerdruckerzeugungseinrichtung zum Zwischenraum erfolgt derart, dass selbsttätig beim Erreichen einer bestimmten der die Druckverhältnisse zwischen Primärschaufelrad und Sekundärschaufelrad charakterisierenden Größe der Ablauf aus dem Arbeitskreislauf bzw. aus der Kupplungsschale unterbrochen wird;
**gekennzeichnet durch** die folgenden Merkmale:
die Staudruckerfassungs- beziehungsweise Steuerdruckerzeugungseinrichtung umfasst wenigstens ein erstes Staudruckrohr und ein zweites Staudruckrohr,
erstes und zweites Staudruckrohr umfassen jeweils ein einen Öffnungsbereich tragendes Bauteil zur Aufnahme von Betriebsmittel aus dem Zwischenraum und sind über separate Steuerdruckleitungen mit der Ventileinrichtung gekoppelt;
die Öffnungsbereiche des ersten und des zweiten Staudruckrohrs sind derart im Zwischenraum angeordnet, dass diese wenigstes hinsichtlich einer Komponente entgegen der theoretischen Strömungsrichtung des Betriebsmittels im Zwischenraum ausgerichtet sind;
das erste und das zweite Staurohr erstrecken sich vom Innendurchmesser der Kupplungsschale in den Zwischenraum hinein, wobei der Öffnungsbereich des ersten Staurohrs und der Öffnungsbereich des zweiten Staurohrs örtlich unterschiedlich angeordnet sind.

4. Hydrodynamische Kupplung nach Anspruch 3, **dadurch gekennzeichnet, dass** die Staudruckerfassungs- bzw. Steuerdruckerzeugungseinrichtung mit der Kupplungsschale wenigstens kraft- und/oder formschlüssig verbunden ist.

5. Hydrodynamische Kupplung nach einem der Ansprüche 3 bis 4, **dadurch gekennzeichnet, dass** Ventileinrichtung und Staudruckerfassungs- bzw. Steuerdruckerzeugungseinrichtung eine bauliche Einheit bilden.

6. Hydrodynamische Kupplung nach einem der Ansprüche 3 bis 5, **dadurch gekennzeichnet, dass** die einer Ventileinrichtung zugeordneten Staudruckerfassungs- beziehungsweise Steuerdruckerzeugungseinrichtungen jeweils eine unterschiedliche Anzahl von ersten und zweiten Staudruckrohren aufweisen.

7. Hydrodynamische Kupplung nach einem der Ansprüche 3 bis 6, **dadurch gekennzeichnet, dass** die Kupplungsschale drehfest mit dem Sekundärschaufelrad gekoppelt ist.

## Claims

1. A method for influencing the discharge of operating medium from the working cycle of a hydrodynamic coupling, comprising two blade wheels, namely a primary blade wheel and a secondary blade wheel, and a housing wall in the form of a coupling shell which is connected in a torsionally rigid manner with the blade wheel and encompasses the other blade wheel in the axial direction at least in part by forming a radial cavity and can be coupled at least with a discharge and at least one means for influencing the discharge;
in which the means for influencing the discharge can be triggered depending on a variable describing the pressure conditions at least indirectly, which pressure conditions are obtained depending on the degree of filling of the hydrodynamic coupling and the occurring relative speed between the primary and secondary blade wheel;
in which the discharge from the working cycle or from the coupling shell is interrupted upon automatically reaching a certain variable characterizing the pressure conditions between primary blade wheel and secondary blade wheel;
at least one valve device is used as a means for influencing the discharge, with the control pressure for pressurizing the valve seat at least indirectly being formed depending on the variable characterizing the pressure conditions between primary blade wheel and secondary blade wheel; **characterized by** the following feature:
the control pressure for pressurizing the valve seat is formed by two partial control pressures which are formed by the dynamic pressures of two flows of different flow thickness obtained in a time-shifted manner relative to each other in the coupling shell.

2. A method according to claim 1, **characterized in that** the variable characterizing the pressure conditions between the primary blade wheel and the secondary blade wheel is formed by the dynamic pressure of the flow obtained in the coupling shell.

3. A hydrodynamic coupling, comprising two blade wheels, a primary blade wheel which can be coupled at least indirectly with a drive and a secondary blade wheel which can be coupled at least indirectly with a power take-off, which jointly form at least a toroidal working chamber;
with a housing wall in the form of a coupling shell which is connected in a torsionally rigid manner with a blade wheel and which encompasses the other blade wheel in the axial direction at least partly by forming a radial cavity;
the coupling shell is associated with at least one discharge;
with at least one means for influencing the discharge;
each means comprises at least one valve device which is arranged between intermediate space and discharge;
the valve device comprises at least one valve body and a control pressure line for pressurizing at least one valve body;
the valve device is associated with at least one dynamic pressure detection device or control pressure generation device for determining the dynamic pressure of the operating medium flow in the cavity and the discharge of the control pressure pressurizing the control pressure line;
the configuration and allocation of dynamic pressure detection device or control pressure generation device to the cavity occurs in such a way that the discharge from the working cycle or from the coupling shell is interrupted automatically upon reaching a certain variable characterizing the pressure conditions between primary blade wheel and secondary blade wheel;
**characterized by** the following features:
the dynamic pressure detection device or control pressure generation device comprises at least a first dynamic pressure pipe and a second dynamic pressure pipe,
with the first and second dynamic pressure pipe each comprising a component carrying an opening section for receiving operating medium from the cavity and being coupled via separate control pressure lines with the valve device;
the opening sections of the first and second dynamic pressure pipe are arranged in the cavity in such a way that are aligned with respect to at least one component against the theoretical direction of flow of the operating medium in the cavity;
the first and second dynamic pressure pipe extend from the inside diameter of the coupling shell into the cavity, with the opening section of the first dynamic pressure pipe and the opening section of the second dynamic pressure pipe being arranged different from one another as regards location;

4. A hydrodynamic coupling according to claim 3, **characterized in that** the dynamic pressure detection device or control pressure generation device is connected with the coupling shell at least in a non-positive and/or positive manner.

5. A hydrodynamic coupling according to one of the claims 3 to 4, **characterized in that** the valve device and dynamic pressure detection device or control pressure generation device form a modular unit.

6. A hydrodynamic coupling according to one of the claims 3 to 5, **characterized in that** the dynamic pressure detection devices or control pressure generation devices allocated to a valve device each have a different number of first and second dynamic pressure pipes.

7. A hydrodynamic coupling according to one of the claims 3 to 6, **characterized in that** the coupling shell is coupled in a torsionally rigid manner with the secondary blade wheel.

## Revendications

1. Procédé destiné à influencer la décharge de fluide provenant du circuit de travail d'un accouplement hydrodynamique, comportant deux roues à palettes -une roue à palettes primaire et une roue à palettes secondaire- et une paroi de boîtier sous forme de coque d'accouplement reliée de manière solidaire en rotation à une roue à palettes, entourant au moins en partie l'autre roue à palettes dans la direction axiale en formant un espacement radial, laquelle paroi peut être couplée au moins à une décharge et au moins un moyen destiné à influencer la décharge ;
dans lequel le ou les moyen(s) destiné(s) à influencer la décharge peut(peuvent) être commandé(s) en fonction d'une grandeur décrivant au moins indirectement les rapports de pression réglés en fonction du degré de remplissage de l'accouplement hydrodynamique et de la vitesse relative produite entre les roues à palettes primaire et secondaire ;
dans lequel, lorsqu'une grandeur définie caractérisant les rapports de pression entre la roue à palettes primaire et la roue à palettes secondaire est atteinte, la décharge provenant du circuit de travail et/ou de la coque d'accouplement est automatiquement interrompue ;
on utilise comme moyen destiné à influencer la décharge au moins un système de soupape, la pression de commande destinée à solliciter au moins indirectement le siège de soupape étant formée en fonction de la grandeur caractérisant les rapports de pression entre la roue à palettes primaire et la roue à palettes secondaire ;
**caractérisé par** la caractéristique suivante:
la pression de commande destinée à solliciter le siège de soupape est formée à partir de deux pressions de commande partielles, lesquelles sont formées par les pressions dynamiques de deux écoulements de différente épaisseur réglés de manière décalée dans le temps l'un par rapport à l'autre dans la coque d'accouplement.

2. Procédé selon la revendication 1, **caractérisé en ce que** la grandeur caractérisant les rapports de pression entre la roue à palettes primaire et la roue à palettes secondaire est formée par la pression dynamique de l'écoulement réglé dans la coque d'accouplement.

3. Accouplement hydrodynamique
comprenant deux roues à palettes -une roue à palettes primaire pouvant être couplée au moins indirectement à un entraînement menant et une roue à palettes secondaire pouvant être couplée au moins indirectement à un entraînement mené- lesquelles forment l'une avec l'autre au moins un espace de travail de forme toroïdale ;
comprenant une paroi de boîtier sous forme de coque d'accouplement reliée de manière solidaire en rotation à une roue à palettes, entourant au moins en partie l'autre roue à palettes dans la direction axiale en formant un espacement radial ;
au moins une décharge est associée à la coque d'accouplement ; comprenant au moins un moyen destiné à influencer la décharge ;
chaque moyen comporte au moins un système de soupape, lequel est disposé entre l'espacement et la décharge ;
le système de soupape comporte au moins un corps de soupape et une conduite de pression de commande destinée à solliciter au moins un corps de soupape ;
au moins un système de détection de pression dynamique et/ou de production de pression de commande destiné à déterminer la pression dynamique du courant de fluide dans l'espacement et la conduite d'évacuation de la pression de commande sollicitant la conduite de pression de commande est associé au système de soupape ;
la configuration et l'affectation du système de détection de pression dynamique et/ou de production de pression de commande par rapport à l'espacement s'effectue de telle sorte que, lorsqu'une grandeur définie caractérisant les rapports de pression entre la roue à palettes primaire et la roue à palettes secondaire est atteinte, la décharge provenant du circuit de travail et/ou de la coque d'accouplement est automatiquement interrompue ;
**caractérisé par** les caractéristiques suivantes :
le système de détection de pression dynamique et/ou de production de pression de commande comporte au moins un premier tuyau de pression dynamique et un second tuyau de pression dynamique,
les premier et second tuyaux de pression dynamique comportent respectivement un composant supportant une zone d'ouverture, destiné à recevoir le fluide provenant de l'espacement, et sont couplés au système de soupape par des conduites de pression de commande séparées ;
les zones d'ouverture des premier et second tuyaux de pression dynamique sont disposées dans l'espacement de telle sorte que celles-ci sont orientées, au moins en ce qui concerne une composante, dans le sens inverse de la direction d'écoulement théorique du fluide dans l'espacement ;
les premier et second tuyaux de pression dynamique s'étendent depuis le diamètre intérieur de la coque d'accouplement à l'intérieur de l'espacement, la zone d'ouverture du premier tuyau de pression dynamique et la zone d'ouverture du second tuyau de pression dynamique étant disposées à des endroits différents.

4. Accouplement hydrodynamique selon la revendication 3, **caractérisé en ce que** le système de détection de pression dynamique et/ou de production de pression de commande est relié à la coque d'accouplement au moins par complémentarité de force et/ou de forme.

5. Accouplement hydrodynamique selon l'une quelconque des revendications 3 à 4, **caractérisé en ce que** le système de soupape et le système de détection de pression dynamique et/ou de production de pression de commande forment une unité de construction.

6. Accouplement hydrodynamique selon l'une quelconque des revendications 3 à 5, **caractérisé en ce que** les systèmes de détection de pression dynamique et/ou de production de pression de commande associés à un système de soupape comprennent respectivement un nombre différent de premiers et seconds tuyaux de pression dynamique.

7. Accouplement hydrodynamique selon l'une quelconque des revendications 3 à 6, **caractérisé en ce que** la coque d'accouplement est couplée de manière solidaire en rotation à la roue à palettes secondaire.
